# EUROPEAN PATENT APPLICATION

(11) **EP 4 664 340 A1**
(43) Date of publication of application: **17.12.2025**
(21) Application number: 25178138.1
(22) Date of filing: 22.05.2025
(51) Int. Cl.: G06F 30/17, G06F 30/27, G06F 111/10

(54) **USING ARTIFICIAL INTELLIGENCE TO GENERATE 3D ARTIFACTS AND MODEL BASED DEFINITION FROM 2D DRAWINGS**

(30) Priority: 14.06.2024 US 202463660435 P
(71) Applicant: The Boeing Company, Arlington, VA 22202 (US)
(72) Inventor: AFRASIABI, Amir, Arlington, 22202 (US); RAFATI, Sina, Arlington, 22202 (US); FACTORY, Brett M., Arlington, 22202 (US); SCOTT, Andrew J., Arlington, 22202 (US)
(74) Representative: Bugnion S.p.A. - US1

(57) **Abstract**

Generating a 3D model from 2D drawings is provided. The method comprises extracting, by a design parser, content from 2D engineering drawings of an assembly and comparing the extracted content to a bill of materials corresponding to a 3D computer assisted design (CAD) model of the assembly to identify missing components from the 3D CAD model. Responsive to identifying missing components, 3D representations of the missing components are modeled based on the 2D engineering drawings, and metadata and textual information related to the 2D engineering drawings. The 3D representations of the missing components are incorporated into the 3D CAD model of the assembly to create a complete 3D CAD model. A manufacturing process for the assembly is then controlled according to the complete 3D CAD model.

## Description

### BACKGROUND INFORMATION

### Technical Field:

The present disclosure relates generally to computer modeling, and more specifically to generating 3D representations from 2D drawings.

### Background:

One of the key requirements for having a Model-Based Engineering manufacturing and production system is to have a fully defined Model-Based Design (MBD) wherein each Computer Aided Design (CAD) artifact is a true representative of actual physical objects. Manufacturing and production companies are struggling with switching from traditional drafting drawings and installation/production instruction to MBD and Model-Based Instruction (MBI).

### SUMMARY

An illustrative embodiment provides a computer-implemented method for generating a 3D model from 2D drawings. The method comprises extracting, by a design parser, content from 2D engineering drawings of an assembly and comparing the extracted content to a bill of materials corresponding to a 3D computer assisted design (CAD) model of the assembly to identify missing components from the 3D CAD model. Responsive to identifying missing components, 3D representations of the missing components are modeled based on the 2D engineering drawings, and metadata and textual information related to the 2D engineering drawings. The 3D representations of the missing components are incorporated into the 3D CAD model of the assembly to create a complete 3D CAD model. A manufacturing process for the assembly is then controlled according to the complete 3D CAD model.

Another illustrative embodiment provides a system for generating a 3D model from 2D drawings. The system comprises a storage device that stores program instructions and one or more processors operably connected to the storage device and configured to execute the program instructions to cause the system to: extract, by a design parser, content from 2D engineering drawings of an assembly; compare the extracted content to a bill of materials corresponding to a 3D computer assisted design (CAD) model of the assembly to identify missing components from the 3D CAD model; responsive to identifying missing components, model 3D representations of the missing components based on the 2D engineering drawings, and metadata and textual information related to the 2D engineering drawings; incorporate the 3D representations of the missing components into the 3D CAD model of the assembly to create a complete 3D CAD model; and control a manufacturing process for the assembly according to the complete 3D CAD model.

An illustrative embodiment provides a computer program product for generating a 3D model from 2D drawings. The computer program product comprises a computer-readable storage medium having program instructions embodied thereon to perform the operations of: extracting, by a design parser, content from 2D engineering drawings of an assembly; comparing the extracted content to a bill of materials corresponding to a 3D computer assisted design (CAD) model of the assembly to identify missing components from the 3D CAD model; responsive to identifying missing components, modeling 3D representations of the missing components based on the 2D engineering drawings, and metadata and textual information related to the 2D engineering drawings; incorporating the 3D representations of the missing components into the 3D CAD model of the assembly to create a complete 3D CAD model; and controlling a manufacturing process for the assembly according to the complete 3D CAD model.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** depicts a block diagram of a 3D representation generator in accordance with an illustrative embodiment;
**Figure 2** depicts an example of a 2D engineering drawing of an assembly that includes a component that is missing from a 3D CAD model;
**Figure 3** depicts an example of a 3D CAD model to which a missing component is added in accordance with an illustrative embodiment;
**Figure 4** depicts a method for generating 3D representations from 2D drawings using CAD macros in accordance with an illustrative embodiment;
**Figure 5** depicts a method for generating 3D representations from 2D drawings using CAD UV map unwrapping in accordance with an illustrative embodiment;
**Figure 6** depicts a first phase of training a 3D semi-generative AI model for generating 3D representations from 2D drawings in accordance with an illustrative embodiment;
**Figure 7** depicts a second phase of training a 3D semi-generative AI model for generating 3D representations from 2D drawings in accordance with an illustrative embodiment;
**Figure 8** depicts a third phase of training a 3D semi-generative AI model for generating 3D representations from 2D drawings in accordance with an illustrative embodiment;
**Figure 9** depicts a method for generating 3D representations from 2D drawings using a 3D semi-generative AI model in accordance with an illustrative embodiment;
**Figure 10** depicts a flowchart illustrating a process for generating a 3D model from 2D drawings in accordance with an illustrative embodiment;
**Figure 11** depicts a process for modelling 3D representations of the missing components based on 2D engineering drawings in accordance with an illustrative embodiment;
**Figure 12** depicts an alternate process for modelling 3D representations of the missing components based on 2D engineering drawings in accordance with an illustrative embodiment.
**Figure 13** depicts an alternate process for modelling 3D representations of the missing components based on 2D engineering drawings in accordance with an illustrative embodiment
**Figure 14** depicts a flowchart illustrating a process for training a semi-generative AI model in accordance with an illustrative embodiment
**Figure 15** depicts a flowchart illustrating a process of for modelling 3D representations of the missing components based on 2D engineering drawings with a trained semi-generative AI model in accordance with an illustrative embodiment; and
**Figure 16** is an illustration of a block diagram of a data processing system in accordance with an illustrative embodiment.

### DETAILED DESCRIPTION

The illustrative embodiments recognize and take into account that one of the key requirements for having a Model-Based Engineering manufacturing and production system is to have a fully defined Model-Based Design (MBD) which means each Computer Aided Design (CAD) artifacts are true representative of actual physical objects.

The illustrative embodiments also recognize and take into account that the majority of aerospace and manufacturing parts and standards do not have 3D representation and/or real images of the parts. Operation teams need to have a visual reference of the target part or assembly that is being referenced on 2D drawing.

The illustrative embodiments provide a method of using Generative Artificial Intelligence to digest scattered production artifacts and documents such as 2D drawings, installation steps, specifications, standards and requirements to generate MBD artifacts for each part number and sub-assemblies/ assemblies.

The illustrative embodiments also provide methods to teach AI to understand installation steps and requirements and visualize them on MBD artifacts.

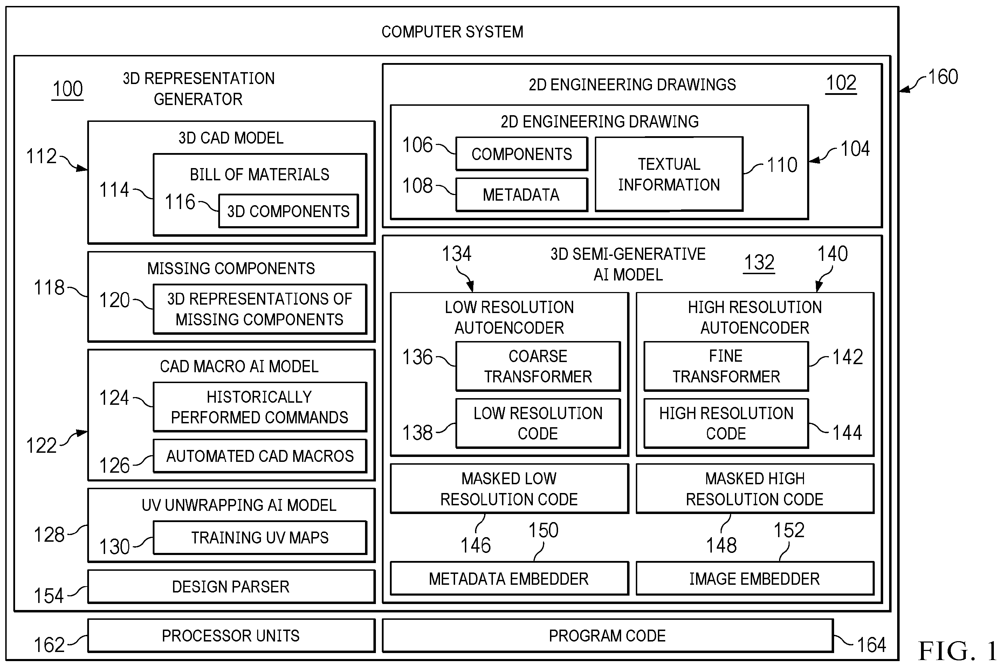

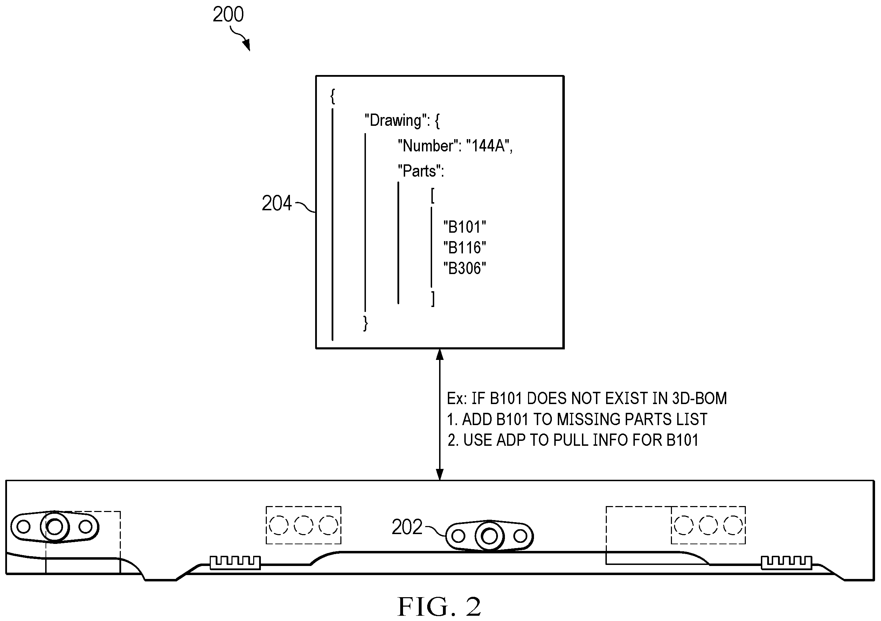

**Figure 1** is a block diagram of a 3D representation generator depicted in accordance with an illustrative embodiment. 3D representation generator **100** compares a 3D CAD model **112** to 2D engineering drawings **102** to determine if there are any missing components **118** that are not present in the 3D CAD model **112** that are included in the 2D engineering drawings **102.** (See **Figure 2**).

Each 2D engineering drawing **104** among 2D engineering drawings **102** comprises a number of components **106.** Each 2D engineering drawing **104** might also comprise metadata **108** and textual information **110** that can be used to help generate 3D representations **120** of missing components. The metadata **108** can be extracted from the 2D engineering drawings **102** by design parser **154.** Design parser **154** reads and interprets information from 2D engineering drawings **102** regarding limitations of the target object to be generated (missing components **118**). Design parser **154** is also able to cross-reference textual information **110.**

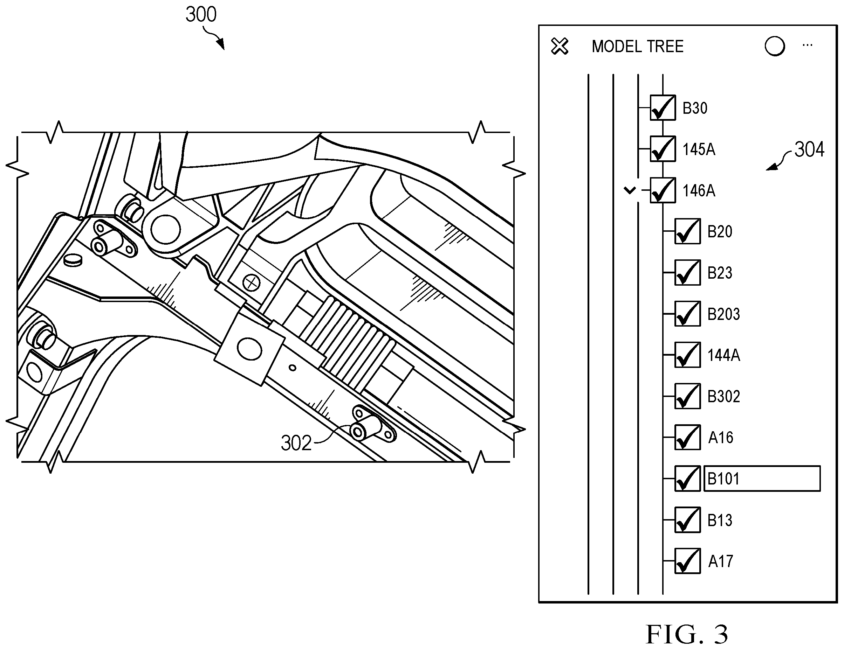

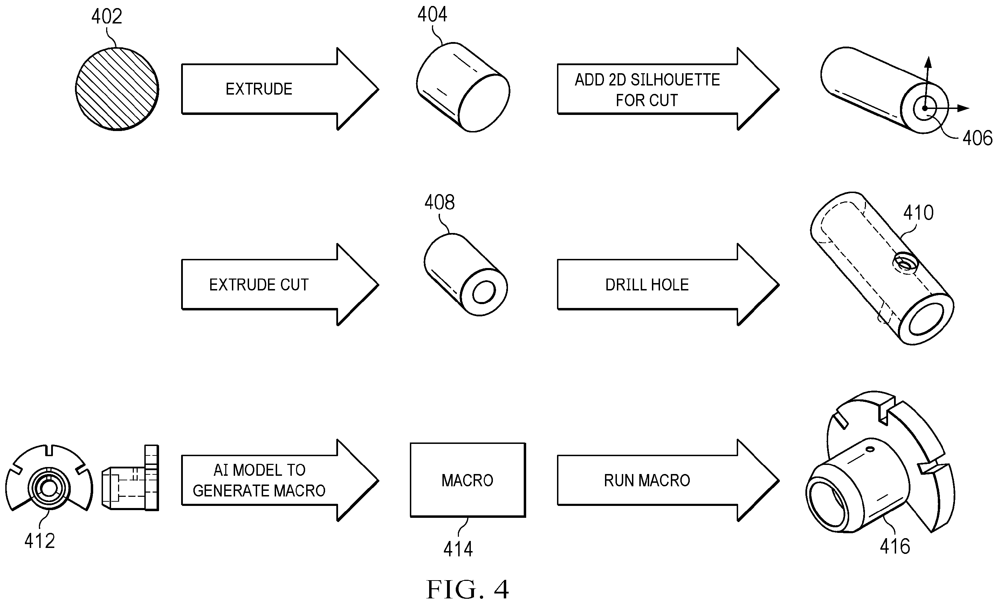

3D representation generator **100** might use a number of alternate artificial intelligence (AI) models to generate the 3D representations **120** of the missing components **118** for inclusion into 3D CAD model **112.** (See **Figure 3**). One model is CAD macro AI model **122.** This model is trained according to historically performed commands **124** made by humans when manually generating 3D models from 2D drawings. Based on these historically performed commands **124,** CAD macro AI model **122** generate automated CAD macros that can be run to generate the 3D representations **120** of missing components **118** from 2D engineering drawings **102.** (See **Figure 4**).

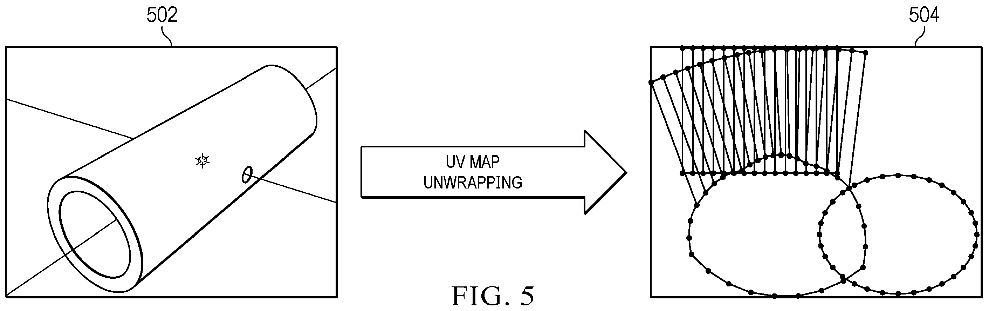

Another model is UV unwrapping model **128** which utilizes a number of training UV maps **130.** UV mapping projects a 3D model's surface to a 2D image for mapping. In UV mapping and unwrapping, U represents the horizontal axis, and V represent the vertical axis in two dimensions because X, Y, and Z are used to denote axes in 3D modeling. (See **Figure 5**).

Another model is a 3D semi-generative AI model **132,** which comprises a low resolution autoencoder **134** and a high resolution autoencoder **140.** Low resolution autoencoder **134** comprises a coarse transformer **136** that can generate low resolution code **138** from masked low resolution code **146** with the help of embeddings provided by a metadata embedder **150** and image embedder **152.**

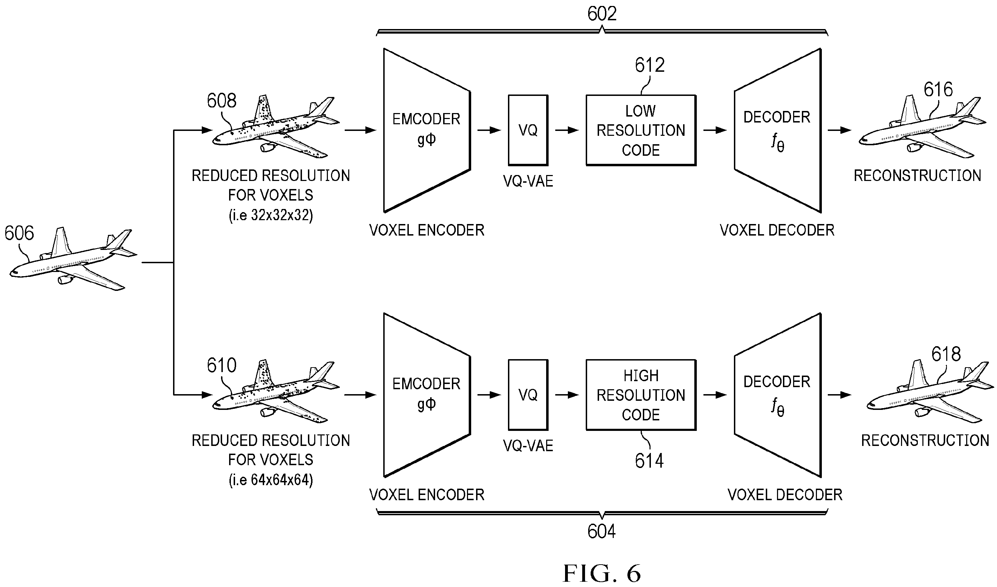

High resolution autoencoder **140** comprises a fine transformer **142** that can generate high resolution code **144** from masked high resolution code **148** with the help of the low resolution code **138** generated by the low resolution autoencoder **134.** (See **Figures 6-9**).

3D representation generator **100** can be implemented in software, hardware, firmware, or a combination thereof. When software is used, the operations performed by 3D representation generator **100** can be implemented in program code configured to run on hardware, such as a processor unit. When firmware is used, the operations performed by 3D representation generator **100** can be implemented in program code and data and stored in persistent memory to run on a processor unit. When hardware is employed, the hardware can include circuits that operate to perform the operations in 3D representation generator **100.**

In the illustrative examples, the hardware can take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field programmable logic array, a field programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **160** is a physical hardware system and includes one or more data processing systems. When more than one data processing system is present in computer system **160,** those data processing systems are in communication with each other using a communications medium. The communications medium can be a network. The data processing systems can be selected from at least one of a computer, a server computer, a mobile device such as a tablet computer, or some other suitable data processing system.

As depicted, computer system **160** includes a number of processor units **162** that are capable of executing program code **164** implementing processes in the illustrative examples. As used herein, a processor unit in the number of processor units **162** is a hardware device and is comprised of hardware circuits such as those on an integrated circuit that respond and process instructions and program code that operate a computer. When a number of processor units **162** execute program code **164** for a process, the number of processor units **162** is one or more processor units that can be on the same computer or on different computers. In other words, the process can be distributed between processor units on the same or different computers in a computer system. Further, the number of processor units **162** can be of the same type or different types of processor units. For example, a number of processor units can be selected from at least one of a single core processor, a dual-core processor, a multi-processor core, a general-purpose central processing unit (CPU), a graphics processing unit (GPU), a digital signal processor (DSP), or some other type of processor unit.

**Figure 2** depicts an example of a 2D engineering drawing of an assembly that includes a component that is missing from a 3D CAD model. In this example, bracket **202** is part of 2D engineering drawing **200** but is currently missing from a corresponding 3D CAD model and must be added to the 3D CAD model to complete the model-based definition (MBD) of the assembly, as shown in **Figure 3****.** The 2D engineering drawing **200** is compared to a bill of materials (BOM) of a corresponding 3D CAD model for the assembly in question to identify any components missing from the MBD in the CAD model. The 3D representation generator of the illustrative embodiments extracts content from the 2D engineering drawing **200** using automatic data processing (ADP). The extracted content might include, e.g., flag notes, sub-assemblies, dimensions, GD&T (Geometric Dimensioning and Tolerance) symbols, etc. If all components extracted from the 2D engineering are present in the BOM, the MBD of the assembly is complete. However, if any components in the 2D engineering drawing 200 are missing from the BOM of the 3D CAD model the MBD is incomplete, and those missing components must be added to the MBD.

JSON file **204** contains ADP extracted metadata listing the components and their respective labels found in 2D engineering drawing **200.** JSON file **204** represents a manufacturing BOM (MBOM), which can be compared to an electronic BOM (EBOM) such as EBOM **304** in **Figure 3****.** If the MBOM **204** and EBOM **304** match, the MBD is complete. In the present example, bracket **202** is missing from the 3D CAD model and must be added.

**Figure 3** depicts an example of a 3D CAD model to which a missing component is added in accordance with an illustrative embodiment. Upon discovery of a missing component, the 3D representation generator goes deeper into the corresponding 2D engineering drawing and engineering references and specification to model the missing component **302,** which is then added to the 3D CAD model **300.**

In addition to modelling the missing component **302** in 3D, the 3D representation generator also generates model-based instructions (MBI) describing the proper installation sequence for adding that components to the 3D CAD model **300** based on textual information in the engineering specification.

**Figure 4** depicts a method for generating 3D representations from 2D drawings using CAD macros in accordance with an illustrative embodiment. In the approach illustrated in **Figure 4****,** numerous examples of manual creation of 3D objects from 2D drawings are recorded.

These recorded operations are used to learn the types of actions taken by human users using CAD systems to generate 3D models for many types of shapes. In the present example, a hollow cylinder with a through hole **410** is generated from an initial circle **402.** Starting with the initial circle **402,** a solid cylinder **404** is extruded into three dimensions. Next a 2D silhouette **406** for a cut is added to the cylinder. The cut is then extruded to produce a hollow cylinder **408.** Next through hole **410** is drilled through the hollow cylinder. This sequence can be recorded into a macro. A similar process can be performed for a number of other shapes such as cones, cubes, etc., of various levels of complexity with special features, all of which can be recorded in macros. A large number of such CAD macros can be used to train an AI model to generate an automated macro **414** when presented with a 2D engineering drawing **412.** This automated macro **414** is then used to generate a 3D representation of the part specified in the 2D engineering drawing **412.**

**Figure 5** depicts a method for generating 3D representations from 2D drawings using CAD UV map unwrapping in accordance with an illustrative embodiment. UV unwrapping is the process of flattening the surface of a 3D model **502** onto a 2D plane to create a UV map **504.** This flattening allows a 2D image (texture) to be accurately applied to the 3D model. This process is similar to peeling an orange and laying its peel flat or representing a globe as a flat map. Specialized algorithms help in minimizing stretching and distortion during this step.

The term "UV" refers to the axes of the 2D texture coordinates (U for horizontal, V for vertical), distinguishing them from the 3D model's X, Y, and Z axes. An AI model can be trained on a number of such unwrapped UV maps to extrapolate how to reverse the process to construct a 3D model from a 2D representation.

**Figure 6** depicts a first phase of training a 3D semi-generative AI model for generating 3D representations from 2D drawings in accordance with an illustrative embodiment. This first phase of training involves training a low resolution autoencoder **602** and a high resolution autoencoder **604** to reconstruct a 3D model **606** from reduced resolution representations **608** and **610.**

In the present example, the first reduced resolution representation **608** of full resolution 3D model **606** comprises a voxel resolution of 32x32x32, which is fed as input data into low resolution autoencoder **602.** The second reduced resolution representation **610** has a higher relative resolution, 64x64x64, than the first reduced resolution representation **608** but is still of lower resolution than the original 3D model **606.** Both autoencoders might be, e.g., vector-quantized variational autoencoders (VQ-VAE).

Low resolution encoder **602** encodes the first reduced resolution representation **608** into low resolution code **612,** which is then decoded to produce a reconstruction **616** of the original 3D model **606.** The high resolution autoencoder **604** encodes the second reduced resolution representation **610** into high resolution code **614,** which is then decoded to produce a second reconstruction **618** of the original 3D model **606.** Through numerous iterations, both autoencoders are trained to reconstruct the full resolution of the original 3D model **606** despite starting with respective reduced resolution representations **608, 610** of that model.

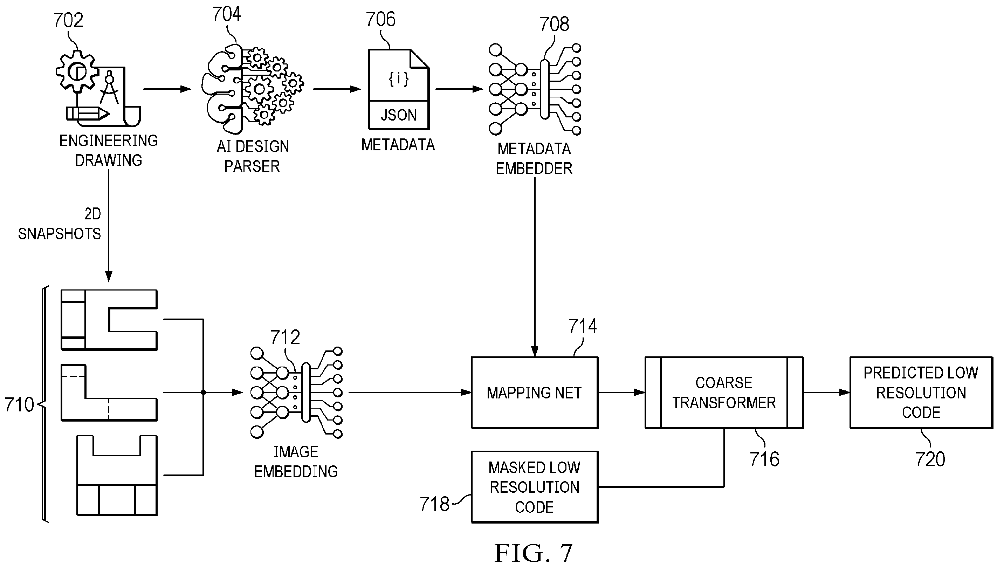

**Figure 7** depicts a second phase of training a 3D semi-generative AI model for generating 3D representations from 2D drawings in accordance with an illustrative embodiment. After the low resolution autoencoder is train to reconstruct the original full resolution model from low resolution code, it is then trained to predict low resolution code **720** from partially masked low resolution code **718.**

To assist with this reconstruction, an AI design parser **704** extracts metadata **706** from a 2D engineering drawing **702.** A metadata embedder **708** embeds this extracted metadata **706** to a mapping network **714.** Similarly, 2D engineering drawing **702** might comprise multiple images **710** of the object or assembly in questions such as, for example, a top view, bottom view, right side, left side, etc. These different views **710** are embedded into an image embedding, which is also fed into the mapping network for cross-reference with the metadata **706.**

A coarse transformer **716** in the low resolution autoencoder applies these metadata and image embedding from the mapping network **714** to the partially masked low resolution code **718** to learn to predict unmasked low resolution code **720.**

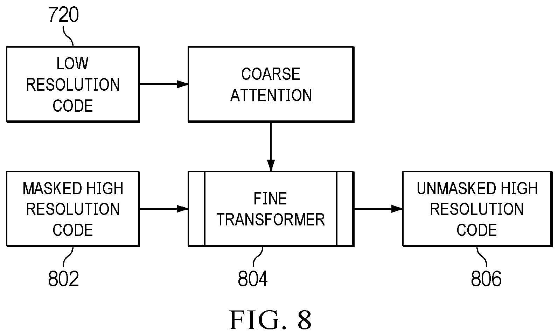

**Figure 8** depicts a third phase of training a 3D semi-generative AI model for generating 3D representations from 2D drawings in accordance with an illustrative embodiment. One the coarse transformer has been trained to predict unmasked low resolution code **720** from partially masked low resolution code, that predicted low resolution code **720** can then be used to train a fine transformer **804** in the high resolution autoencoder to predict unmasked high resolution code **806** from partially masked high resolution code **802.**

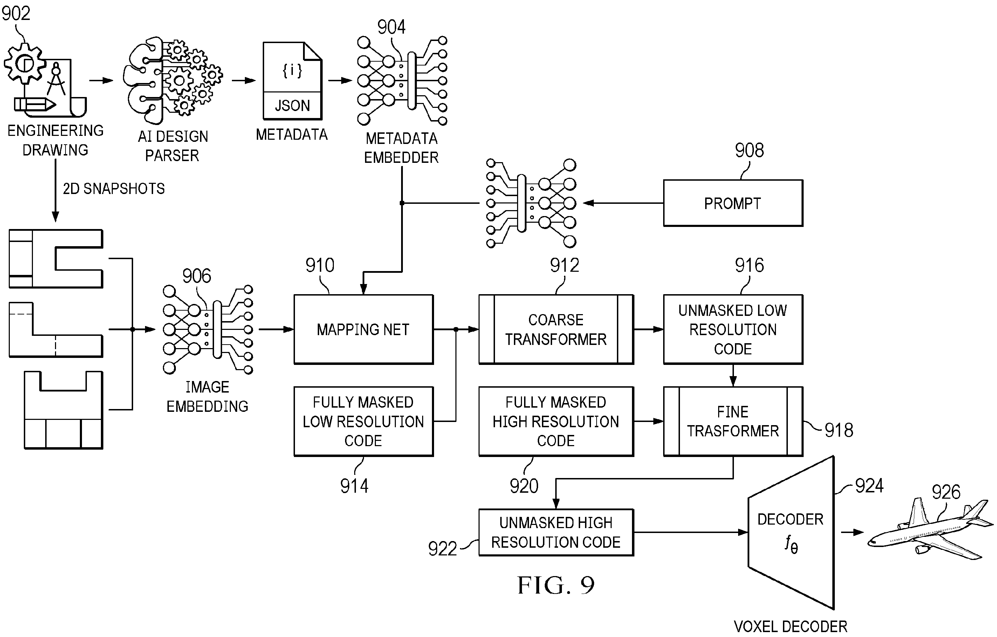

**Figure 9** depicts a method for generating 3D representations from 2D drawings using a 3D semi-generative AI model in accordance with an illustrative embodiment. After the coarse and fine transformers are trained as described above, they can be combined into a single process flow to generate a high resolution 3D model **926** from a 2D engineering drawing **902.**

Similar to the process shown in **Figure 7****,** metadata embeddings **904** and image embeddings **906** generated from the 2D engineering drawing **902** are fed into a mapping network **910** However, in this application at least one prompt **908** is also fed into the mapping network **910.** Prompt **908** might include, e.g., a specific material to be used for building the object or assembly modeled in 3D, which acts as a constraint in constructing the 3D model **926.**

The metadata embeddings **904,** image embeddings **906,** and prompt **908** assist the trained coarse transformer **912** to predict unmasked low resolution code **916** from fully masked low resolution code **914.** The predicted unmasked low resolution code **916** is then used by the trained fine transformer **918** to predict unmasked high resolution code **922** from fully masked high resolution code **920.**

A voxel decoder **924** then decodes the predicted unmasked high resolution code **922** to generate 3D model **926.**

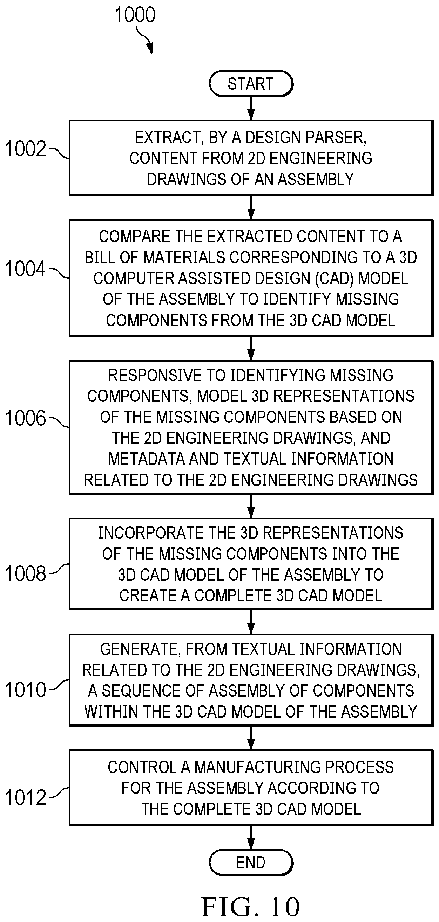

**Figure 10** depicts a flowchart illustrating a process for generating a 3D model from 2D drawings in accordance with an illustrative embodiment. Process **1000** can be implemented in 3D representation generator **100** in **Figure 1****.**

Process **1000** begins by extracting, by a design parser, content from two-dimensional (2D) engineering drawings of an assembly (operation **1002**).

The extracted content is compared to a bill of materials (BOM) corresponding to a three-dimensional (3D) computer assisted design (CAD) model of the assembly to identify missing components from the 3D CAD model (operation **1004**).

Responsive to identifying missing components, process **1000** models 3D representations of the missing components based on the 2D engineering drawings, and metadata and textual information related to the 2D engineering drawings (operation **1006**).

The 3D representations of the missing components are incorporated into the 3D CAD model of the assembly to create a complete 3D CAD model (operation **1008**).

Process **1000** may generate, from textual information related to the 2D engineering drawings, a sequence of assembly of components within the 3D CAD model of the assembly (operation **1010**).

Process **1000** controls a manufacturing process for the assembly according to the complete 3D CAD model (operation **1012**). Process **1000** then ends.

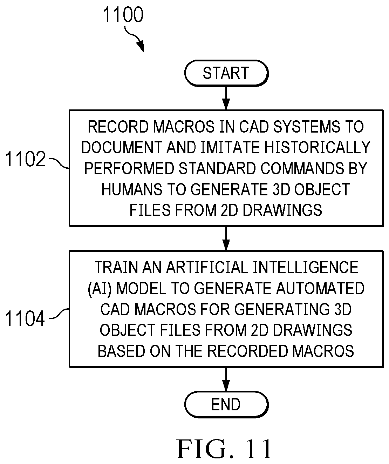

**Figure 11** depicts a process for modelling 3D representations of the missing components based on 2D engineering drawings in accordance with an illustrative embodiment. Process **1100** is a detailed example of an implementation of operation **1006** in **Figure 10****.**

Process **1100** begins by recording macros in CAD systems to document and imitate historically performed standard commands by humans to generate 3D object files from 2D drawings (operation **1102**).

Process **1100** trains an artificial intelligence (AI) model to generate automated CAD macros for generating 3D object files from 2D drawings based on the recorded macros (operation **1104**). Process **1100** then ends.

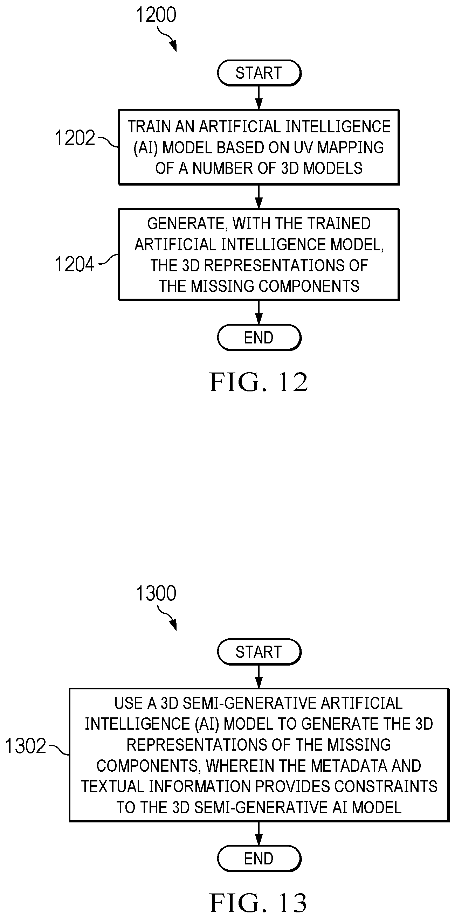

**Figure 12** depicts an alternate process for modelling 3D representations of the missing components based on 2D engineering drawings in accordance with an illustrative embodiment. Process **1200** is a detailed example of an implementation of operation **1006** in **Figure 10****.**

Process **1200** begins by training an artificial intelligence (AI) model based on UV mapping of a number of 3D models (operation **1202**).

Process **1200** generates, with the trained artificial intelligence model, the 3D representations of the missing components (operation **1204**). Process **1200** then ends. **Figure 13** depicts an alternate process for modelling 3D representations of the missing components based on 2D engineering drawings in accordance with an illustrative embodiment. Process **1300** is a detailed example of an implementation of operation **1006** in **Figure 10****.**

Process **1300** comprises using a 3D semi-generative artificial intelligence (AI) model to generate the 3D representations of the missing components, wherein the metadata and textual information provides constraints to the 3D semi-generative AI model (operation **1302**).

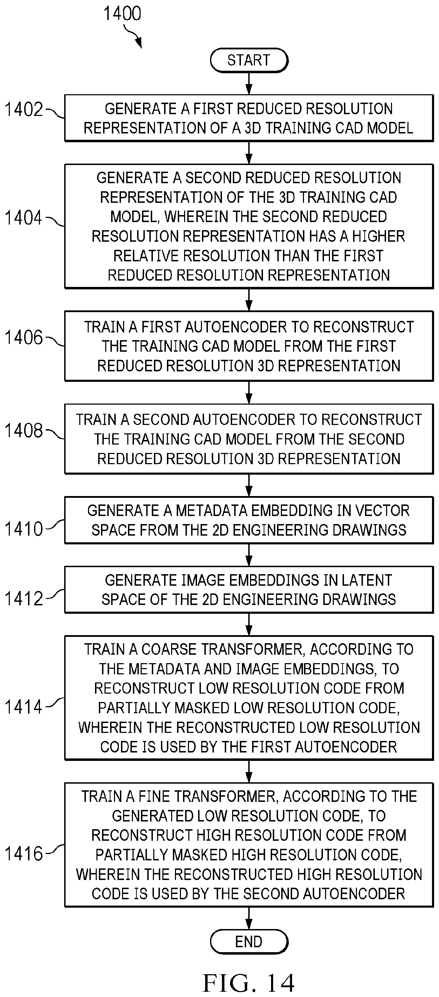

**Figure 14** depicts a flowchart illustrating a process for training a semi-generative AI model in accordance with an illustrative embodiment. Process **1400** is an example of training a semi-generative AI model such as the one used in process **1300.**

Process **1400** begins by generating a first reduced resolution representation of a 3D training CAD model (operation **1402**) and generating a second reduced resolution representation of the 3D training CAD model, wherein the second reduced resolution representation has a higher relative resolution than the first reduced resolution representation (operation **1404**).

A first autoencoder is trained to reconstruct the training CAD model from the first reduced resolution 3D representation (operation **1406**). A second autoencoder to reconstruct the training CAD model from the second reduced resolution 3D representation (operation **1408**).

A metadata embedding is generated in vector space from the 2D engineering drawings (operation **1410**). Image embeddings are generated in latent space of the 2D engineering drawings (operation **1412**).

A coarse transformer is trained according to the metadata and image embeddings to reconstruct low resolution code from partially masked low resolution code, wherein the reconstructed low resolution code is used by the first autoencoder (operation **1414**).

A fine transformer is then trained according to the generated low resolution code to reconstruct high resolution code from partially masked high resolution code, wherein the reconstructed high resolution code is used by the second encoder (operation **1416**). Process **1400** then ends.

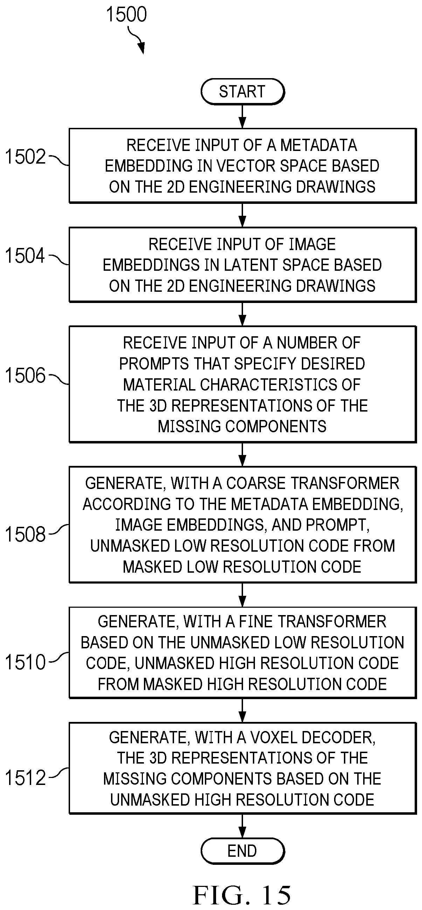

**Figure 15** depicts a flowchart illustrating a process of for modelling 3D representations of the missing components based on 2D engineering drawings with a trained semi-generative AI model in accordance with an illustrative embodiment. Process **1500** is a detailed example of the operation of a trained semi-generative AI model such as the one used in process **1300.**

Process **1500** begins by the receiving input of a metadata embedding in vector space based on the 2D engineering drawings (operation **1502**) and receiving input of image embeddings in latent space of based on the 2D engineering drawings (operation **1504**).

The semi-generative AI model also receives input of a number of prompts that specify desired material characteristics of the 3D representations of the missing components (operation **1506**).

A coarse transformer generates, according to the metadata embedding, image embeddings, and prompt, unmasked low resolution code from masked low resolution code (operation **1508**).

A fine transformer generates, based on the unmasked low resolution code, unmasked high resolution code from masked high resolution code (operation **1510**).

A voxel decoder generates the 3D representations of the missing components based on the unmasked high resolution code (operation **1512**). Process **1500** then ends.

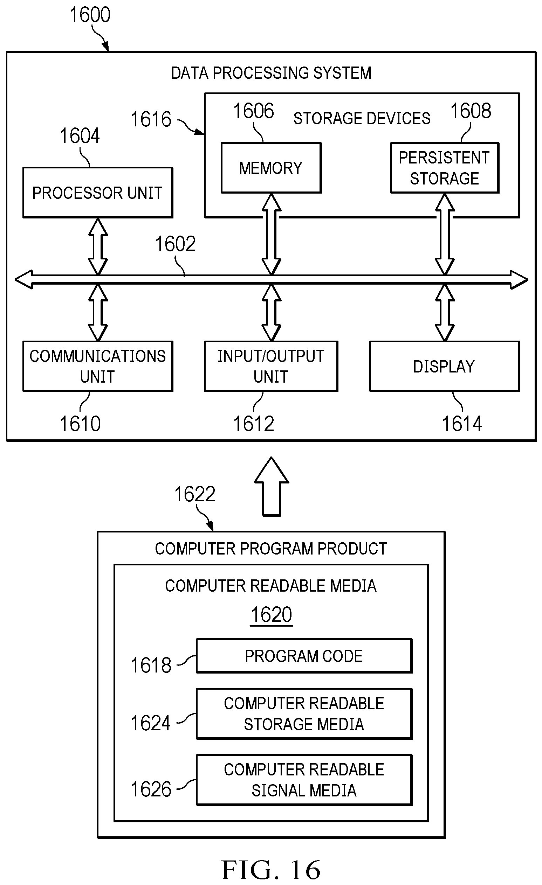

Turning now to **Figure 16****,** an illustration of a block diagram of a data processing system is depicted in accordance with an illustrative embodiment. Data processing system **1600** may be used to implement computer system **160** in **Figure 1****.** In this illustrative example, data processing system **1600** includes communications framework **1602,** which provides communications between processor unit **1604,** memory **1606,** persistent storage **1608,** communications unit **1610,** input/output (I/O) unit **1612,** and display **1614.** In this example, communications framework **1602** takes the form of a bus system.

Processor unit **1604** serves to execute instructions for software that may be loaded into memory **1606.** Processor unit **1604** may be a number of processors, a multi-processor core, or some other type of processor, depending on the particular implementation. In an embodiment, processor unit **1604** comprises one or more conventional general-purpose central processing units (CPUs). In an alternate embodiment, processor unit **1604** comprises one or more graphical processing units (GPUs). Memory **1606** and persistent storage **1608** are examples of storage devices **1616.** A storage device is any piece of hardware that is capable of storing information, such as, for example, without limitation, at least one of data, program code in functional form, or other suitable information either on a temporary basis, a permanent basis, or both on a temporary basis and a permanent basis. Storage devices **1616** may also be referred to as computer-readable storage devices in these illustrative examples. Memory **1606,** in these examples, may be, for example, a random access memory or any other suitable volatile or non-volatile storage device. Persistent storage **1608** may take various forms, depending on the particular implementation.

For example, persistent storage **1608** may contain one or more components or devices. For example, persistent storage **1608** may be a hard drive, a flash memory, a rewritable optical disk, a rewritable magnetic tape, or some combination of the above. The media used by persistent storage **1608** also may be removable. For example, a removable hard drive may be used for persistent storage **1608.** Communications unit **1610,** in these illustrative examples, provides for communications with other data processing systems or devices. In these illustrative examples, communications unit **1610** is a network interface card.

Input/output unit **1612** allows for input and output of data with other devices that may be connected to data processing system **1600.** For example, input/output unit **1612** may provide a connection for user input through at least one of a keyboard, a mouse, or some other suitable input device. Further, input/output unit **1612** may send output to a printer. Display **1614** provides a mechanism to display information to a user.

Instructions for at least one of the operating system, applications, or programs may be located in storage devices **1616,** which are in communication with processor unit **1604** through communications framework **1602.** The processes of the different embodiments may be performed by processor unit **1604** using computer-implemented instructions, which may be located in a memory, such as memory **1606.**

These instructions are referred to as program code, computer-usable program code, or computer-readable program code that may be read and executed by a processor in processor unit **1604.** The program code in the different embodiments may be embodied on different physical or computer-readable storage media, such as memory **1606** or persistent storage **1608.**

Program code **1618** is located in a functional form on computer-readable media **1620** that is selectively removable and may be loaded onto or transferred to data processing system **1600** for execution by processor unit **1604.** Program code **1618** and computer-readable media **1620** form computer program product **1622** in these illustrative examples. In one example, computer-readable media **1620** may be computer-readable storage media **1624** or computer-readable signal media **1626.**

In these illustrative examples, computer-readable storage media **1624** is a physical or tangible storage device used to store program code **1618** rather than a medium that propagates or transmits program code **1618.** Computer readable storage media **1624,** as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire. Alternatively, program code **1618** may be transferred to data processing system **1600** using computer-readable signal media **1626.** Computer-readable signal media **1626** may be, for example, a propagated data signal containing program code **1618.** For example, computer-readable signal media **1626** may be at least one of an electromagnetic signal, an optical signal, or any other suitable type of signal. These signals may be transmitted over at least one of communications links, such as wireless communications links, optical fiber cable, coaxial cable, a wire, or any other suitable type of communications link.

The different components illustrated for data processing system **1600** are not meant to provide architectural limitations to the manner in which different embodiments may be implemented. The different illustrative embodiments may be implemented in a data processing system including components in addition to or in place of those illustrated for data processing system **1600.** Other components shown in **Figure 16** can be varied from the illustrative examples shown. The different embodiments may be implemented using any hardware device or system capable of running program code **1618.**

As used herein, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

As used herein, "a number of" when used with reference to items, means one or more items. For example, "a number of different types of networks" is one or more different types of networks. In illustrative example, a "set of" as used with reference items means one or more items.

For example, a set of metrics is one or more of the metrics.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

Further, the disclosure comprises configurations according to the following clauses.

Clause 1. A computer-implemented method for generating a 3D model from 2D drawings, the method comprising:
using a number of processors to perform:
extracting (1002), by a design parser (154), content from 2D engineering drawings (102) of an assembly;
comparing (1004) the extracted content to a bill of materials corresponding to a 3D computer assisted design (CAD) model (112) of the assembly to identify missing components (118) from the 3D CAD model;
responsive to identifying missing components, modeling (1006) 3D representations (120) of the missing components based on the 2D engineering drawings, and metadata (108) and textual information (110) related to the 2D engineering drawings;
incorporating (1008) the 3D representations of the missing components into the 3D CAD model of the assembly to create a complete 3D CAD model; and
controlling (1012) a manufacturing process for the assembly according to the complete 3D CAD model.

Clause 2. The method of Clause 1, further comprising generating (1010), from textual information related to the 2D engineering drawings, a sequence of assembly of components within the 3D CAD model of the assembly. Clause 3. The method of Clause 1, wherein modeling the 3D representation of the missing components comprises recording (1102) macros in CAD systems to document and imitate historically performed standard commands (124) by humans to generate 3D object files from 2D drawings. Clause 4. The method of Clause 3, further comprising training (1104) an artificial intelligence (AI) model

(122) to generate automated CAD macros (126) for generating 3D object files from 2D drawings based on the recorded macros.

Clause 5. The method of Clause 1, wherein modeling the 3D representation of the missing components comprises:
training (1202) an artificial intelligence (AI) model based on UV mapping (130) of a number of 3D models; and
generating (1204), with the trained artificial intelligence model, the 3D representations of the missing components.

Clause 6. The method of Clause 1, wherein modeling the 3D representation of the missing components comprises using (1302) a 3D semi-generative artificial intelligence (AI) (132) model to generate the 3D representations of the missing components, wherein the metadata and textual information provides constraints to the 3D semi-generative AI model.

Clause 7. The method of Clause 6, wherein the 3D semi-generative artificial intelligence model is trained by:
generating (1402) a first reduced resolution representation of a 3D training CAD model;
generating (1404) a second reduced resolution representation of the 3D training CAD model, wherein the second reduced resolution representation has a higher relative resolution than the first reduced resolution representation;
training (1406) a first autoencoder (134) to reconstruct the training CAD model from the first reduced resolution 3D representation; and
training (1408) a second autoencoder (140) to reconstruct the training CAD model from the second reduced resolution 3D representation.

Clause 8. The method of Clause 7, further comprising:
generating (1410) a metadata embedding in vector space from the 2D engineering drawings;
generating (1412) image embeddings in latent space of the 2D engineering drawings; and
training (1414) a coarse transformer (136), according to the metadata and image embeddings, to reconstruct low resolution code (138) from partially masked low resolution code (146), wherein the
reconstructed low resolution code is used by the first autoencoder.

Clause 9. The method of Clause 8, further comprising:
Training (1416) a fine transformer (142), according to the generated low resolution code, to reconstruct high resolution code (144) from partially masked high resolution code (148), wherein the reconstructed high resolution code is used by the second encoder.

Clause 10. The method of Clause 6, wherein the 3D semi-generative AI model:
receives (1502) input of a metadata embedding in vector space based on the 2D engineering drawings;
receives (1502) input of image embeddings in latent space of based on the 2D engineering drawings;
receives (1506) input of a number of prompts that specify desired material characteristics of the 3D representations of the missing components;
generates (1508), with a coarse transformer according to the metadata embedding, image embeddings, and prompt, unmasked low resolution code from masked low resolution code;
generates (1510), with a fine transformer based on the unmasked low resolution code, unmasked high resolution code from masked high resolution code; and
generates (1512), with a voxel decoder, the 3D representations of the missing components based on the unmasked high resolution code.

Clause 11. A system for generating a 3D model from 2D drawings, the system comprising:
a storage device (1616) that stores program instructions;
one or more processors (1604) operably connected to the storage device and configured to execute the program instructions to cause the system to:
   extract (1002), by a design parser (154), content from 2D engineering drawings (102) of an assembly;
   compare (1004) the extracted content to a bill of materials corresponding to a 3D computer assisted design (CAD) model (112) of the assembly to identify missing components (118) from the 3D CAD model;
   responsive to identifying missing components, model (1006) 3D representations (120) of the missing components based on the 2D engineering drawings, and metadata (108) and textual information (110) related to the 2D engineering drawings;
   incorporate (1008) the 3D representations of the missing components into the 3D CAD model of the assembly to create a complete 3D CAD model; and
   control (1012) a manufacturing process for the assembly according to the complete 3D CAD model.

Clause 12. The system of Clause 11, wherein the processors further execute instructions to generate (1010), from textual information related to the 2D engineering drawings, a sequence of assembly of components within the 3D CAD model of the assembly.

Clause 13. The system of Clause 11, wherein modeling the 3D representation of the missing components comprises recording (1102) macros in CAD systems to document and imitate historically performed standard commands (124) by humans to generate 3D object files from 2D drawings.

Clause 14. The system of Clause 13, wherein the processors further execute instructions to train (1104) an artificial intelligence (AI) model (122) to generate automated CAD macros (126) for generating 3D object files from 2D drawings based on the recorded macros.

Clause 15. The system of Clause 11, wherein modeling the 3D representation of the missing components comprises:
training (1202) an artificial intelligence (AI) model based on UV mapping (130) of a number of 3D models; and
generating (1204), with the trained artificial intelligence model, the 3D representations of the missing components.

Clause 16. The system of Clause 11, wherein modeling the 3D representation of the missing components comprises using (1302) a 3D semi-generative artificial intelligence (AI) model (132) to generate the 3D representations of the missing components, wherein the metadata and textual information provides constraints to the 3D semi-generative AI model.

Clause 17. The system of Clause 16, wherein the 3D semi-generative artificial intelligence model is trained by:
generate (1402) a first reduced resolution representation of a 3D training CAD model;
generate (1404) a second reduced resolution representation of the 3D training CAD model, wherein the second reduced resolution representation has a higher relative resolution than the first reduced resolution representation;
train (1406) a first autoencoder (134) to reconstruct the training CAD model from the first reduced resolution 3D representation; and
train (1408) a second autoencoder (140) to reconstruct the training CAD model from the second reduced resolution 3D representation.

Clause 18. A computer program product for generating a 3D model from 2D drawings, the computer program product comprising:
a computer-readable storage medium (1624) having program instructions embodied thereon to perform the operations of:
extracting (1002), by a design parser (154), content from 2D engineering drawings (102) of an assembly;
comparing (1004) the extracted content to a bill of materials corresponding to a 3D computer assisted design (CAD) model (112) of the assembly to identify missing components (118) from the 3D CAD model;
responsive to identifying missing components, modeling (1006) 3D representations (120) of the missing components based on the 2D engineering drawings, and metadata (108) and textual information (110) related to the 2D engineering drawings;
incorporating (1008) the 3D representations of the missing components into the 3D CAD model of the assembly to create a complete 3D CAD model; and
controlling (1012) a manufacturing process for the assembly according to the complete 3D CAD model.

Clause 19. The computer program product of Clause 18, further comprising instructions for generating (1010), from textual information related to the 2D engineering drawings, a sequence of assembly of components within the 3D CAD model of the assembly.

Clause 20. The computer program product of Clause 18, wherein modeling the 3D representation of the missing components comprises recording macros (1102) macros in CAD systems to document and imitate historically performed standard commands (124) by humans to generate 3D object files from 2D drawings.

Clause 21. The computer program product of Clause 20, further comprising instructions for training (1104) an artificial intelligence (AI) model (122) to generate automated CAD macros (126) for generating 3D object files from 2D drawings based on the recorded macros.

Clause 22. The computer program product of Clause 18, wherein modeling the 3D representation of the missing components comprises:
training (1202) an artificial intelligence (AI) model based on UV mapping (130) of a number of 3D models; and
generating (1204), with the trained artificial intelligence model, the 3D representations of the missing components.

Clause 23. The computer program product of Clause 18, wherein modeling the 3D representation of the missing components comprises using (1302) a 3D semi-generative artificial intelligence (AI) model (132) to generate the 3D representations of the missing components, wherein the metadata and textual information provides constraints to the 3D semi-generative AI model.

Clause 24. The computer program product of Clause 23, wherein the 3D semi-generative artificial intelligence model is trained by:
generating (1402) a first reduced resolution representation of a 3D training CAD model;
generating (1404) a second reduced resolution representation of the 3D training CAD model, wherein the second reduced resolution representation has a higher relative resolution than the first reduced resolution representation;
training (1406) a first autoencoder (134) to reconstruct the training CAD model from the first reduced resolution 3D representation; and
training (1408) a second autoencoder (140) to reconstruct the training CAD model from the second reduced resolution 3D representation.

## Claims

1. A computer-implemented method (1000) for generating a 3D model from 2D drawings, the method comprising:
using a number of processors to perform:
extracting (1002), by a design parser (154), content from 2D engineering drawings (102) of an assembly;
comparing (1004) the extracted content to a bill of materials corresponding to a 3D computer assisted design, CAD, model (112) of the assembly to identify missing components (118) from the 3D CAD model (112);
responsive to identifying missing components (118), modeling (1006) 3D representations (120) of the missing components based on the 2D engineering drawings, and metadata (108) and textual information (110) related to the 2D engineering drawings;
incorporating (1008) the 3D representations (120) of the missing components into the 3D CAD model (112) of the assembly to create a complete 3D CAD model; and
controlling (1012) a manufacturing process for the assembly according to the complete 3D CAD model.

2. The method (1000) of claim 1, further comprising generating (1010), from textual information related to the 2D engineering drawings, a sequence of assembly of components within the 3D CAD model of the assembly.

3. The method (1000) of claim 1 or 2, wherein modeling (1006) the 3D representation (120) of the missing components comprises recording (1102) macros in CAD systems to document and imitate historically performed standard commands (124) by humans to generate 3D object files from 2D drawings.

4. The method (1000) of claim 3, further comprising training (1104) an artificial intelligence, AI, model (122) to generate automated CAD macros (126) for generating 3D object files from 2D drawings based on the recorded macros.

5. The method (1000) of claim 1, wherein modeling (1006) the 3D representation (120) of the missing components comprises:
training (1202) an artificial intelligence, AI, model based on UV mapping (130) of a number of 3D models; and
generating (1204), with the trained artificial intelligence model, the 3D representations (120) of the missing components.

6. The method (1000) of claim 1, wherein modeling (1006) the 3D representation (120) of the missing components comprises using (1302) a 3D semi-generative artificial intelligence, AI, (132) model to generate the 3D representations (120) of the missing components, wherein the metadata and textual information provides constraints to the 3D semi-generative AI model.

7. The method (1000) of claim 6, wherein the 3D semi-generative artificial intelligence model is trained by:
generating (1402) a first reduced resolution representation of a 3D training CAD model;
generating (1404) a second reduced resolution representation of the 3D training CAD model, wherein the second reduced resolution representation has a higher relative resolution than the first reduced resolution representation;
training (1406) a first autoencoder (134) to reconstruct the training CAD model from the first reduced resolution 3D representation; and
training (1408) a second autoencoder (140) to reconstruct the training CAD model from the second reduced resolution 3D representation.

8. The method (1000) of claim 7, further comprising:
generating (1410) a metadata embedding in vector space from the 2D engineering drawings;
generating (1412) image embeddings in latent space of the 2D engineering drawings; and
training (1414) a coarse transformer (136), according to the metadata and image embeddings, to reconstruct low resolution code (138) from partially masked low resolution code (146), wherein the reconstructed low resolution code is used by the first autoencoder.

9. The method (1000) of claim 8, further comprising:
training (1416) a fine transformer (142), according to the generated low resolution code (138), to reconstruct high resolution code (144) from partially masked high resolution code (148), wherein the reconstructed high resolution code (138) is used by the second autoencoder.

10. The method (1000) of claim 6, wherein the 3D semi-generative AI model is configured to:
receive (1502) input of a metadata embedding in vector space based on the 2D engineering drawings;
receive (1502) input of image embeddings in latent space based on the 2D engineering drawings;
receive (1506) input of a number of prompts that specify desired material characteristics of the 3D representations of the missing components;
generate (1508), with a coarse transformer according to the metadata embedding, image embeddings, and prompt, unmasked low resolution code from masked low resolution code;
generate (1510), with a fine transformer based on the unmasked low resolution code, unmasked high resolution code from masked high resolution code; and
generate (1512), with a voxel decoder, the 3D representations of the missing components based on the unmasked high resolution code.

11. A system (1600) for generating a 3D model from 2D drawings, the system comprising:
a storage device (1616) that is configured to store program instructions;
one or more processors (1604) operably connected to the storage device (1616) and configured to execute the program instructions to cause the system (1600) to:
extract (1002), by a design parser (154), content from 2D engineering drawings (102) of an assembly;
compare (1004) the extracted content to a bill of materials corresponding to a 3D computer assisted design, CAD, model (112) of the assembly to identify missing components (118) from the 3D CAD model (112);
responsive to identifying missing components, model (1006) 3D representations (120) of the missing components based on the 2D engineering drawings, and metadata (108) and textual information (110) related to the 2D engineering drawings;
incorporate (1008) the 3D representations (120) of the missing components into the 3D CAD model (112) of the assembly to create a complete 3D CAD model; and
control (1012) a manufacturing process for the assembly according to the complete 3D CAD model.

12. The system (1600) of claim 11, wherein the processors (1604) are further configured to execute instructions to generate (1010), from textual information related to the 2D engineering drawings, a sequence of assembly of components within the 3D CAD model of the assembly.

13. The system (1600) of claim 11, wherein modeling (1006) the 3D representation (120) of the missing components comprises recording (1102) macros in CAD systems to document and imitate historically performed standard commands (124) by humans to generate 3D object files from 2D drawings.

14. The system (1600) of claim 13, wherein the processors (1604) are further configured to execute instructions to train (1104) an artificial intelligence, AI, model (122) to generate automated CAD macros (126) for generating 3D object files from 2D drawings based on the recorded macros.

15. A computer program product (1622) for generating a 3D model from 2D drawings, the computer program product comprising (1622):
a computer-readable storage medium (1624) having program instructions embodied thereon to perform the method (1000) according to any one of the claims 1 to 10.
